# FASCICULE DE BREVET EUROPEEN

(11) **EP 4 127 413 B1**
(45) Date de publication et mention de la délivrance du brevet: **24.04.2024**
(21) Numéro de dépôt: 21716511.7
(22) Date de dépôt: 22.03.2021
(51) Int. Cl.: F01D 11/08, C04B 35/80, F01D 25/24, F01D 11/24

(54) **ENSEMBLE D'ANNEAU DE TURBINE**
TURBINENRING-MONTAGE
TURBINE RING ASSEMBLY

(30) Priorité: 24.03.2020 FR 2002849
(43) Date de publication de la demande: 08.02.2023
(73) Titulaire: SAFRAN AIRCRAFT ENGINES, 75015 Paris (FR)
(72) Inventeur: JARROSSAY, Clément, 77550 MOISSY-CRAMAYEL (FR); CONGRATEL, Sébastien, Serge, Francis, 77550 MOISSY-CRAMAYEL (FR); DANIS, Antoine Claude Michel Etienne, 77550 MOISSY-CRAMAYEL (FR); GAILLARD, Aurélien, 77550 MOISSY-CRAMAYEL (FR); TABLEAU, Nicolas, Paul, 77550 MOISSY-CRAMAYEL (FR)
(74) Mandataire: Regimbeau
(86) Numéro de dépôt international: PCT/FR2021/050469
(87) Numéro de publication internationale: WO 2021/191538

(56) Documents cités:
- WO-A2-2017/103411
- FR-A1- 3 068 072
- JP-B2- 5 887 130
- US-A1- 2018 051 591
- US-A1- 2020 063 601

## Description

### DOMAINE DE L'INVENTION

La présente invention se rapporte à un ensemble d'anneau de turbine comprenant d'une part, une pluralité de secteurs d'anneau en matériau composite à matrice céramique, et d'autre part une structure de support de cet anneau.

### ETAT DE LA TECHNIQUE

Le domaine d'application de l'invention est notamment celui des moteurs aéronautiques à turbine à gaz. L'invention est toutefois applicable à d'autres turbomachines, par exemple des turbines industrielles.

Dans le cas d'ensembles d'anneau de turbine entièrement métalliques, il est nécessaire de refroidir tous les éléments de l'ensemble et en particulier l'anneau de turbine qui est soumis aux flux les plus chauds.

Ce refroidissement a un impact notable sur la performance du moteur, puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Pour tenter de résoudre ces problèmes, on a envisagé de réaliser des secteurs d'anneau de turbine en matériau composite à matrice céramique (CMC), afin de s'affranchir de l'utilisation d'un matériau métallique.

Les matériaux CMC présentent de bonnes propriétés mécaniques, ce qui les rend aptes à constituer des éléments de structures. De plus, ils conservent avantageusement ces propriétés à des températures élevées. L'utilisation de matériaux CMC a ainsi permis de réduire le flux de refroidissement à imposer lors du fonctionnement et donc à augmenter la performance des turbomachines.

Exprimé autrement, l'intégration d'un anneau en matériau CMC, dont la température de tenue est élevée, permet de réduire le débit d'air prélevé en fond de chambre, nécessaire à la pressurisation des cavités hors-veines, et par voie de conséquence, de gagner en consommation spécifique du moteur.

Malgré la faible densité des matériaux en CMC comparativement aux matériaux métalliques usuels, le gain de masse espéré n'est pas obtenu, du fait des contraintes d'intégration de l'anneau avec les pièces avec lesquelles il coopère.

Le document FR 3076578 illustre typiquement un tel ensemble à anneau en matériau CMC associé à une structure métallique de support d'anneau.

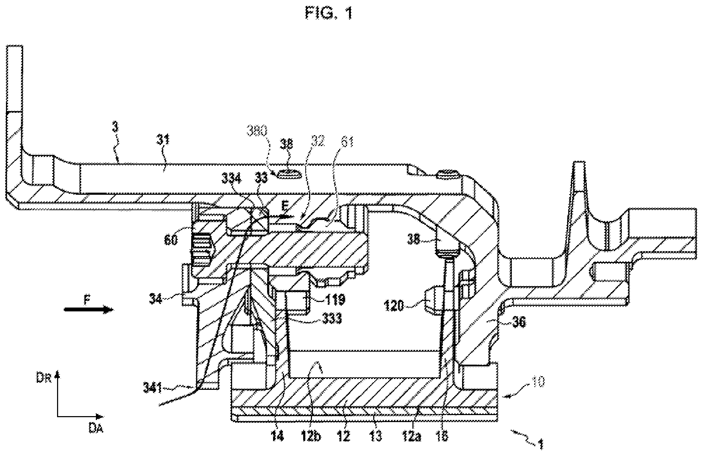

La figure 1 annexée est une vue schématique en coupe d'un ensemble d'anneau de turbine conforme à cet art antérieur.

Plus précisément, l'ensemble d'anneau de turbine haute pression représenté comprend un anneau de turbine 1 en matériau composite à matrice céramique (CMC) et une structure métallique 3 de support de cet anneau. Cet anneau 1 entoure un ensemble de pales rotatives (lesquelles ne sont pas représentées ici). L'anneau 1 est formé d'une pluralité de secteurs d'anneau 10 (un seul est visible sur la figure 1). Les flèches D_{A} et D_{R} indiquent respectivement les directions axiale et radiale de l'anneau de turbine 1.

Comme illustré sur la figure 1, chaque secteur d'anneau 10 présente, selon un plan défini par les directions axiale D_{A} et radiale D_{R}, une section sensiblement en forme de la lettre grecque π (pi) inversée. Cette section comprend une base annulaire 12 et des pattes radiales d'accrochage amont et aval, respectivement 14 et 16. Les termes "amont" et "aval" sont utilisés dans l'ensemble de la présente demande, en référence au sens d'écoulement du flux gazeux dans la turbine, lequel est représenté par la flèche F.

La base annulaire 12 comporte, suivant la direction radiale D_{R} de l'anneau 1, une face interne 12a et une face externe 12b opposées l'une à l'autre. La face interne 12a de la base annulaire 12 est revêtue d'une couche 13 de matériau abradable pour définir une veine d'écoulement de flux gazeux dans la turbine. Les termes "interne" et "externe" sont utilisés ici en référence à la direction radiale D_{R} de la turbine.

La structure 3 de support d'anneau 1, qui est fixée à un carter de turbine, comprend une virole centrale 31, qui s'étend globalement dans la direction axiale D_{A}. Son axe de révolution est confondu avec l'axe de révolution de l'anneau de turbine 1 lorsqu'ils sont fixés ensemble. La structure comprend en outre une première et une seconde brides radiales annulaires 32, respectivement 36. La première bride 32 est positionnée en amont de la seconde bride 36.

L'ensemble d'anneau de turbine 1 comprend en outre des premier et second flasques annulaires 33 et 34, ces deux flasques annulaires étant fixés de manière amovible sur la première bride radiale annulaire 32. Ils sont disposés en amont de l'anneau de turbine 1 par rapport au sens F d'écoulement du flux gazeux dans la turbine. Le premier flasque 33 est disposé en aval du second flasque 34.

Le premier flasque annulaire 33 présente une première portion 333 interne et une seconde portion externe 334.

Le second flasque annulaire 34 présente une première extrémité 341 libre et une seconde extrémité 342 opposée à la première, laquelle est au contact de la virole centrale 31. La seconde extrémité 342 du second flasque annulaire 34 est également fixée de manière amovible à la structure de support d'anneau 1, et plus particulièrement à la première bride radiale annulaire 32.

Lorsque l'ensemble d'anneau 1 est en place, la première portion 333 du premier flasque annulaire 33 se trouve en appui contre la patte radiale d'accrochage amont 14 de chacun des secteurs d'anneau 10 composant l'anneau de turbine 1, et la seconde portion 334 du premier flasque annulaire 34 se trouve en appui contre au moins une partie de la première bride radiale annulaire 32.

Les deux flasques 33 et 34 sont fixés de manière amovible sur la bride radiale annulaire amont 32 à l'aide de vis 60 et d'écrous 61 de fixation, les vis 60 traversant des orifices prévus respectivement dans les deux flasques ainsi que dans la bride 32. A nouveau, une seule vis et un seul écrou sont visibles sur la figure 1.

Le second flasque annulaire 34 est dédié à la reprise de l'effort du distributeur haute pression (DHP) sur l'ensemble d'anneau 1, en faisant transiter cet effort vers la ligne carter qui est plus robuste mécaniquement, c'est-à-dire vers la ligne de la structure de support d'anneau, ainsi que cela est représenté par la flèche E sur la figure 1. L'effort résiduel, qui passe par le premier flasque amont 33 est réduit puisque sa première portion 333 présente une section réduite, et est donc plus souple, ce qui permet d'appliquer un minimum d'effort sur l'anneau 1 en CMC.

Dans la direction axiale D_{A}, la bride radiale annulaire aval 36 de la structure de support d'anneau 3 est séparée du premier flasque annulaire amont 33 d'une distance correspondant à l'écartement des pattes radiales d'accrochage amont et aval 14 et 16 de manière à maintenir ces dernières entre la bride radiale annulaire aval 36 et le premier flasque amont 33.

Pour maintenir en position les secteurs d'anneau 10, et donc l'anneau de turbine 1, avec la structure 3 de support d'anneau, l'ensemble d'anneau comprend, pour chaque secteur d'anneau 10, des premiers pions 119 coopérant avec la patte d'accrochage amont 14 et le premier flasque annulaire 33, et des seconds pions 120 coopérant avec la patte d'accrochage aval 16 et la seconde bride radiale annulaire 36. Bien entendu des orifices de réception (non visibles) de ces pions sont prévus à cet effet.

La structure 3 de support d'anneau comprend en outre des pions radiaux 38 qui permettent de maintenir l'anneau en position radiale basse c'est-à-dire vers la veine, de manière déterministe. Il existe en effet un jeu entre les pions axiaux 119 et 120 et les alésages sur l'anneau 1 pour compenser la dilatation différentielle entre le métal et les éléments en CMC qui s'opère à chaud. Les pions radiaux 38 coopèrent avec des orifices 380 réalisés selon la direction radiale D_{R} dans la virole centrale 31 de la structure 3 de support d'anneau.

On décrit dans le document WO 2017/103411 un ensemble d'anneau de turbine conforme au préambule de la revendication 1 annexée.
Selon cet art antérieur, relativement audit sens d'écoulement d'un flux gazeux dans ladite turbine :
- la virole comporte une première portion amont qui s'étend radialement au-dessus de la première patte d'accrochage et une deuxième portion aval qui s'étend dans le prolongement de la première portion amont et radialement au-dessus de la deuxième patte d'accrochage, la première portion amont ayant la forme d'un cylindre droit et la deuxième portion aval ayant une forme tronconique qui, à partir d'une extrémité de la première portion amont s'étend vers l'axe de l'anneau de turbine en présentant une épaisseur globalement constante ;
- la bride radiale amont s'étend à partir de la portion amont pour venir en appui contre la patte d'accrochage amont, tandis que la bride radiale aval s'étend à partir de la portion aval pour venir en contact contre la patte d'accrochage aval.

Grâce à ces caractéristiques, on transfère une partie de la matière de la virole vers un rayon réduit. On diminue ainsi son volume et sa masse, tout en obtenant une pièce axisymétrique. De plus, cette structure permet également de diminuer la souplesse du carter et donc les déplacements de l'ensemble, du fait de la présence de cette région convergente dans une partie du carter.

Par ailleurs, on limite l'emploi de vis et de pions pour maintenir l'anneau, ce qui réduit la masse de l'ensemble.

Partant de ce contexte, la présente invention a pour but de perfectionner encore un tel ensemble d"anneau de turbine, en particulier sur le plan de sa masse.

### PRESENTATION DE L'INVENTION

A cet effet, l'invention concerne notamment un ensemble d'anneau de turbine comprenant une pluralité de secteurs d'anneau en matériau composite à matrice céramique formant un anneau de turbine et une structure de support d'anneau, chaque secteur d'anneau ayant, selon un plan de coupe défini par une direction axiale et une direction radiale de l'anneau de turbine, ladite direction axiale correspondant au sens d'écoulement d'un flux gazeux dans ladite turbine, une base avec, dans la direction radiale de l'anneau de turbine, une face radialement interne définissant la face interne de l'anneau de turbine et une face radialement externe à partir de laquelle s'étendent en saillie une patte d'accrochage amont et une patte d'accrochage aval, ladite structure de support d'anneau comportant une virole qui s'étend autour de l'anneau de turbine, de laquelle s'étendent radialement en saillie vers l'anneau de turbine une bride radiale amont et une bride radiale aval par lesquelles sont maintenues les pattes d'accrochage amont et aval de chaque secteur d'anneau, ladite virole comportant, relativement audit sens d'écoulement d'un flux gazeux dans ladite turbine, une première portion amont qui s'étend radialement au-dessus de la première patte d'accrochage et une deuxième portion aval qui s'étend dans le prolongement de la première portion amont et radialement au-dessus de la deuxième patte d'accrochage, ladite première portion amont ayant la forme d'un cylindre droit et la deuxième portion aval ayant une forme tronconique qui, à partir d'une extrémité de la première portion amont s'étend vers l'axe de l'anneau de turbine en présentant une épaisseur globalement constante, ladite bride radiale amont s'étendant à partir de ladite portion amont pour venir en appui, directement ou indirectement, contre la patte d'accrochage amont, tandis que la bride radiale aval s'étend à partir de la portion aval pour venir en contact contre la patte d'accrochage aval.

Selon l'invention, l'anneau est maintenu, relativement auxdites brides radiales, par des pions axiaux qui coopèrent respectivement d'une part avec la bride radiale amont, via des premier et second flasques annulaires et directement avec la bride radiale aval, et d'autre part, avec les pattes d'accrochage amont et aval.

Grâce à ces caractéristiques, l'anneau est calé radialement, de sorte qu'il n'est plus nécessaire de faire usage, comme dans l'art antérieur décrit plus haut de pions radiaux assurant un blocage déterministe. Le fait de pouvoir se passer de tels pions contribue à réduire la masse de l'ensemble. Par ailleurs, selon l'art antérieur décrit plus haut, l'épaisseur notable du carter se justifiait notamment par le fait qu'elle était nécessaire pour garantir une longueur de guidage suffisante des pions. Ceux-ci n'étant maintenant plus nécessaire, ladite épaisseur peut être revue à la baisse et peut atteindre notamment la moitié de l'épaisseur selon l'art antérieur.

Selon des modes de réalisation particuliers de l'invention :
- ladite virole présente une épaisseur globalement constante entre lesdites deux brides ;
- les portions amont et aval forment un angle compris entre 30 et 80°, de préférence entre 30 et 70°.
- ledit anneau est maintenu en outre par compression entre lesdites brides radiales.

Selon certaines caractéristiques additionnelles de l'invention :
- lesdits premier et second flasques annulaires présentent globalement la même épaisseur considérée en direction axiale, le long de leur étendue radiale ;
- ledit anneau est au moins formé en partie d'un tissage tridimensionnel de fibres de céramique comprenant des fils de chaîne et des fils de trame, caractérisé par le fait que le ratio fils de chaîne /fils de trame est variable au sein dudit anneau ;
- ledit ratio est moins élevé au sein de ladite base annulaire, qu'au sein desdites pattes d'accrochage.

Enfin, la présente invention est également relative à une turbomachine comprenant un ensemble d'anneau de turbine conforme à l'une quelconque des caractéristiques détaillées ci-dessus.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, des modes de réalisation possibles.

Sur ces dessins :
[Fig. 1] est, comme indiqué plus haut, une vue schématique en coupe d'un ensemble d'anneau de turbine conforme à l'art antérieur précité ;
[Fig. 2] est une vue analogue à la figure 1 d'un ensemble conforme à la présente invention ;
[Fig. 3] est une vue tridimensionnelle et en coupe de l'ensemble de la figure 2.

### DESCRIPTION DETAILLEE DE L'INVENTION

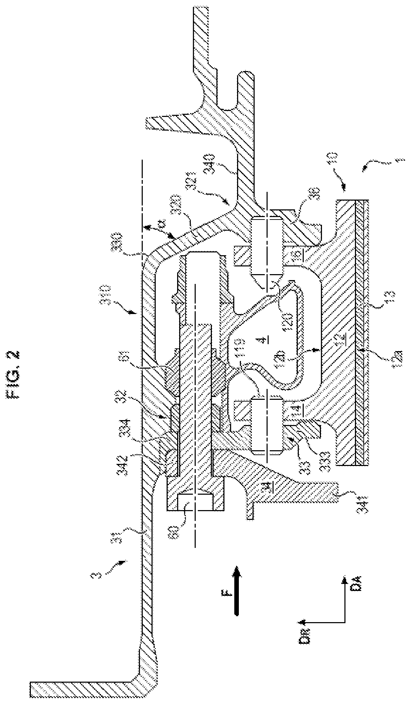

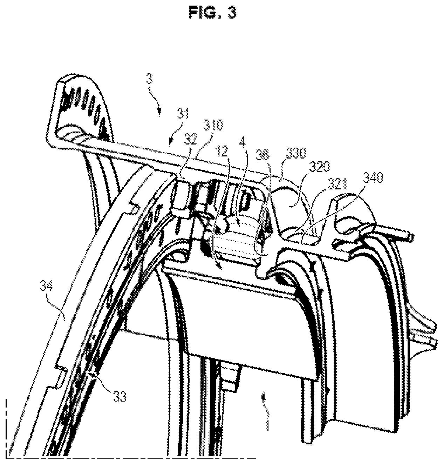

L'ensemble d'anneau de turbine représenté sur les figures 2 et 3 annexées d'un exemple de réalisation de l'invention, est structurellement analogue avec l'ensemble conforme à l'art antérieur qui a été décrit plus haut en référence à la figure 1.

Dans la description qui suit, les références numériques identiques à celles déjà utilisées en référence à la figure 1 correspondent à des pièces identiques ou similaires. Dans ces conditions et sauf mention contraire particulière, seront essentiellement décrits ci-après les seuls éléments spécifiques de l'invention.

De la même manière que selon l'art antérieur précité, l'ensemble selon l'invention comporte une structure 3 de support d'anneau 1 qui comprend une virole centrale 31 de laquelle s'étendent radialement en saillie une première et une seconde brides 32 et 36 par lesquelles sont maintenues les première et seconde pattes d'accrochage 14 et 16 de chaque secteur d'anneaux 10 en matériau composite à matrice céramique.

Selon l'invention, cette virole présente la particularité de comporter une première portion amont 310 et une deuxième portion aval 320, lesquelles sont coaxiales, cette première portion amont 310 ayant la forme d'un cylindre droit, tandis que la deuxième portion aval est à paroi convergente. La zone de transition 330 de ces deux portions 310 et 320 est avantageusement courbe, c'est à dire dépourvue d'angle saillant.

Avantageusement et comme montré sur les figures 2 et 3, cette deuxième portion aval a la forme d'un tronc de cône.

Toujours selon l'invention, la première bride radiale 32 est fixée à la première portion amont 310, tandis que la seconde bride radiale 36 est fixée à la région aval de la deuxième portion aval 320. Exprimé autrement, elle s'étend dans la région de la portion 320 la plus éloignée de la portion amont 310.

Dans le cas illustré ici, cette seconde bride s'étend à la frontière de la deuxième portion 320 qui se poursuit par une extension 340 aval, coaxiale à la première portion 310.

Grâce à cette structure, on permet un transfert de la matière du carter tout au moins partiellement vers un rayon plus réduit, ce qui permet de diminuer sensiblement le volume de ce carter et donc sa masse. De plus, on obtient ainsi une pièce axisymétrique, ce qui rend sa fabrication plus aisée.

Par ailleurs, cette modification permet également de diminuer la souplesse et donc les déplacements de l'ensemble d'anneau de turbine, du fait de la conicité particulière du carter dans la deuxième portion aval.

Avantageusement, l'angle α formé par les génératrices des portions amont 310 et aval 320 est compris entre 30 et 80° et préférentiellement entre 30 et 70°, ce qui permet d'obtenir un bon compromis entre raideur et réduction de la masse totale.

Afin de réduire encore la masse globale de l'ensemble de l'invention, on peut recourir à l'une ou l'autre des solutions qui seront décrites ci-après.

Ainsi, on peut faire usage d'un flasque 34 disposé en amont de la structure des figures 2 et 3 dont l'épaisseur est affinée pour gagner en masse. Cette pièce permet de dérouter les efforts axiaux qui proviennent du diffuseur de haute pression vers le carter externe afin de soulager l'anneau 1. Affiner un tel flasque aurait pu contraindre l'anneau 1. Toutefois, une telle optimisation de sa géométrie permet d'augmenter sa souplesse et donc de réduire les efforts transmis axialement. Par conséquent, en plus du gain de poids, l'anneau 1 n'est pas plus contraint que selon le montage de l'art antérieur décrit plus haut.

Selon l'invention, l'épaisseur du flasque 34 est telle que les deux flasques 33 et 34 présentent globalement la même épaisseur considérée en direction axiale, le long de leur étendue radiale. Ainsi, selon les cas, l'épaisseur du flasque 34 peut être réduite de moitié par rapport à ce qui se pratique selon l'art antérieur.

Comme dans l'état de la technique, l'anneau 1 est maintenu axialement, relativement aux brides axiales 32 et 36, par des pions axiaux 119 et 120 qui coopèrent d'une part respectivement avec la première bride radiale 32, via les premier et second flasques annulaires 33 et 34, et directement avec la seconde bride radiale 36 et, d'autre part, avec les première et seconde patte d'accrochage 14 et 16.

En direction radiale, l'anneau 1 est maintenu par compression entre les brides radiales 32 et 36 en raison de la souplesse apportée par la diminution d'épaisseur du flasque 34 et la forme tronconique de la deuxième portion 320 de la virole centrale 31. On permet ainsi un frettage des pattes d'accrochage 14 et 16 de chaque secteur d'anneau 10, de sorte que ce dernier est maintenu radialement. De ce fait, les pions radiaux représentés sous la référence 38 dans la figure 1 précitée ne sont plus nécessaires. Par conséquent, on réduit encore la masse globale de l'ensemble selon l'invention.

De manière connue, l'anneau 1 peut être obtenu au moins en partie par tissage tridimensionnel de fibres céramiques, ce tissage comprenant des fils de chaîne et des fils de trame, comme décrit notamment dans le document FR 2942844. Toujours dans le but de réduire la masse de l'ensemble selon l'invention, on peut procéder à un tel tissage en rendant variable le ratio fils de chaîne/fils de trame pour la fabrication de cet anneau. Plus particulièrement, on peut faire usage d'un ratio moins élevé au sein de la base annulaire 12, relativement aux pattes d'accrochage 14 et 16.

De cette manière, on réduit l'épaisseur du tissage dans la partie centrale constituée de la base annulaire 12, tandis que l'on conserve l'épaisseur des pattes d'accrochage 14 et 16. Par conséquent, et pour un même nombre de couches de tissage, on a alors une partie centrale plus fine et donc plus légère, mais avec des pattes toujours aussi épaisses et solides.

A titre purement indicatif, la réduction d'épaisseur peut être de l'ordre de 0.5 à 5mm.

Bien que cela ne fasse pas partie d'une caractéristique particulière de l'invention, on remarquera que l'ensemble représenté aux figures 2 et 3 annexées comporte un dispositif de refroidissement référencé 4.

Plus précisément, la face externe 12b et les pattes d'accrochage 14 et 16 de l'anneau 1 forment une cavité hors veine, autrement dit une cavité externe à la veine d'écoulement de fluide chaud F.

Du fait de la présence d'air à température élevée côté veine, la paroi 12 est soumise à des gradients thermiques importants. Par ailleurs les pressions élevées existant dans la veine d'écoulement d'air chaud augmentent le risque de fuite d'air chaud, notamment au niveau des jonctions entre les secteurs d'anneau 10. L'injection d'un air de refroidissement dans la cavité hors veine permet ainsi de refroidir la paroi 12 de l'anneau et de diminuer les gradients thermiques dans celle-ci, et également d'augmenter la pression dans la cavité hors veine, limitant ainsi les risques de fuite d'air chaud s'écoulant de la veine.

Le dispositif de refroidissement précité est rattaché aux flasques 33 et 34, et comporte une tête dirigée à proximité de la paroi 12 de l'anneau, cette tête étant pourvue d'ouvertures non représentées pour former des canaux de refroidissement.

## Revendications

1. Ensemble d'anneau de turbine comprenant une pluralité de secteurs d'anneau (10) en matériau composite à matrice céramique formant un anneau de turbine (1) et une structure (3) de support d'anneau, chaque secteur d'anneau (10) ayant, selon un plan de coupe défini par une direction axiale (D_{A}) et une direction radiale (D_{R}) de l'anneau de turbine (1), ladite direction axiale correspondant au sens d'écoulement d'un flux gazeux (F) dans ladite turbine, une base (12) avec, dans la direction radiale (D_{R}) de l'anneau de turbine (1), une face radialement interne (12a) définissant la face interne de l'anneau de turbine (1) et une face radialement externe (12b) à partir de laquelle s'étendent en saillie une patte d'accrochage amont (14) et une patte d'accrochage aval (16), ladite structure de support d'anneau (3) comportant une virole (31) qui s'étend autour de l'anneau de turbine (1), de laquelle s'étendent radialement en saillie vers l'anneau de turbine (1) une bride radiale amont (32) et une bride radiale aval (36) par lesquelles sont maintenues les pattes d'accrochage amont et aval (14, 16) de chaque secteur d'anneau (10), ladite virole (31) comportant, relativement audit sens d'écoulement (F) d'un flux gazeux dans ladite turbine :
une première portion amont (310) qui s'étend radialement au-dessus de la première patte d'accrochage (14) et une deuxième portion aval (320) qui s'étend dans le prolongement de la première portion amont (310) et radialement au-dessus de la deuxième patte d'accrochage (16), ladite première portion amont (310) ayant la forme d'un cylindre droit et la deuxième portion aval (320) ayant une forme tronconique qui, à partir d'une extrémité de la première portion amont (310) s'étend vers l'axe de l'anneau de turbine (1) en présentant une épaisseur globalement constante ;
ladite bride radiale amont (32) s'étendant à partir de ladite portion amont (310) pour venir en appui, directement ou indirectement, contre la patte d'accrochage amont (14), tandis que la bride radiale aval (36) s'étend à partir de la portion aval (320) pour venir en contact contre la patte d'accrochage aval (16), **caractérisé par le fait que** l'anneau (1) est maintenu, relativement auxdites brides radiales (32, 36), par des pions axiaux (119, 120) qui coopèrent respectivement d'une part avec la bride radiale amont (32), via des premier et second flasques annulaires (33, 34) et directement avec la bride radiale aval (36), et d'autre part, avec les pattes d'accrochage amont et aval (14, 16).

2. Ensemble d'anneau de turbine selon la revendication 1, selon lequel ladite virole (31) présente une épaisseur globalement constante entre lesdites deux brides (32, 36).

3. Ensemble d'anneau de turbine selon la revendication 1 ou 2, selon lequel les portions amont (310) et aval (320) forment un angle compris entre 30 et 80°, de préférence entre 30 et 70°.

4. Ensemble d'anneau de turbine l'une des revendications 1 à 3, selon lequel ledit anneau (1) est maintenu en outre par compression entre lesdites brides radiales (32, 36).

5. Ensemble d'anneau de turbine selon l'une des revendications 1 à 4, selon lequel lesdits premier et second flasques annulaires (33, 34) présentent globalement la même épaisseur considérée en direction axiale, le long de leur étendue radiale.

6. Ensemble d'anneau de turbine selon l'une des revendications précédentes, dans lequel ledit anneau (1) est au moins formé en partie d'un tissage tridimensionnel de fibres de céramique comprenant des fils de chaîne et des fils de trame, et dans lequel le ratio fils de chaîne /fils de trame est variable au sein dudit anneau (1).

7. Ensemble d'anneau de turbine selon la revendication 6, selon lequel ledit ratio est moins élevé au sein de ladite base annulaire (12), qu'au sein desdites pattes d'accrochage (14, 16).

8. Turbomachine comprenant un ensemble d'anneau de turbine (1) selon l'une quelconque des revendications 1 à 7.

## Patentansprüche

1. Turbinenringmontage, umfassend eine Vielzahl von Ringsektoren (10) aus Verbundmaterial mit Keramikmatrix, die einen Turbinenring (1) bilden und eine Ringträgerstruktur (3), wobei jeder Ringsektor (10) gemäß einer Schnittebene, die von einer axialen Richtung (D_{A}) und einer radialen Richtung (D_{R}) des Turbinenrings (1) festgelegt ist, wobei die axiale Richtung der Strömungsrichtung eines Gasstroms (F) in der Turbine entspricht, eine Basis (12) hat mit, in der radialen Richtung (D_{R}) des Turbinenrings (1), einer radial inneren Fläche (12a), die die innere Fläche des Turbinenrings (1) festlegt und einer radial äußeren Fläche (12b), von der aus sich eine stromaufwärtige Befestigungslasche (14) und eine stromabwärtige Befestigungslasche (16) hervorstehend erstrecken, wobei die Ringträgerstruktur (3) einen Mantelring (31) aufweist, der sich um den Turbinenring (1) erstreckt, von dem aus sich radial hervorstehend zum Turbinenring (1) ein stromaufwärtiger radialer Flansch (32) und ein stromabwärtiger radialer Flansch (36) erstrecken, durch die die stromaufwärtige und stromabwärtige Befestigungslasche (14, 16) jedes Ringsektors (10) gehalten werden,
wobei der Mantelring (31) relativ zur Strömungsrichtung (F) eines Gasstroms in der Turbine aufweist:
einen stromaufwärtigen ersten Abschnitt (310), der sich radial oberhalb der ersten Befestigungslasche (14) erstreckt und einen stromabwärtigen zweiten Abschnitt (320), der sich in der Verlängerung des stromaufwärtigen ersten Abschnitts (310) und radial oberhalb der zweiten Befestigungslasche (16) erstreckt, wobei der stromaufwärtige erste Abschnitt (310) die Form eines geraden Zylinders hat und der stromabwärtige zweite Abschnitt (320) eine Kegelstumpfform hat, die sich ab einem Ende des stromaufwärtigen ersten Abschnitts (310) zur Achse des Turbinenrings (1) erstreckt, wobei er eine allgemein konstante Dicke aufweist;
wobei sich der stromaufwärtige radiale Flansch (32) ab dem stromaufwärtigen Abschnitt (310) erstreckt, um sich direkt oder indirekt auf der stromaufwärtigen Befestigungslasche (14) abzustützen, wohingegen sich der stromabwärtige radiale Flansch (36) ab dem stromabwärtigen Abschnitt (320) erstreckt, um mit der stromabwärtigen Befestigungslasche (16) in Kontakt zu kommen, **dadurch gekennzeichnet, dass** der Ring (1) von axialen Stiften (119, 120) relativ zu den radialen Flanschen (32, 36) gehalten wird, die jeweils zum einen mit dem stromaufwärtigen radialen Flansch (32) über eine erste und zweite ringförmige Wange (33, 34) und direkt mit dem stromabwärtigen radialen Flansch (36) und zum anderen mit der stromaufwärtigen und stromabwärtigen Befestigungslasche (14, 16) zusammenwirken.

2. Turbinenringmontage nach Anspruch 1, wobei der Mantelring (31) zwischen den zwei Flanschen (32, 36) eine allgemein konstante Dicke aufweist.

3. Turbinenringmontage nach Anspruch 1 oder 2, wobei der stromaufwärtige Abschnitt (310) und der stromabwärtige Abschnitt (320) einen Winkel zwischen 30 und 80°, vorzugweise zwischen 30 und 70°, bilden.

4. Turbinenringmontage nach einem der Ansprüche 1 bis 3, wobei der Ring (1) ferner durch Kompression zwischen den radialen Flanschen (32, 36) gehalten wird.

5. Turbinenringmontage nach einem der Ansprüche 1 bis 4, wobei die erste und zweite ringförmige Wange (33, 34) allgemein dieselbe geschätzte Dicke in axialer Richtung entlang ihrer radialen Erstreckung aufweisen.

6. Turbinenringmontage nach einem der vorangehenden Ansprüche, wobei der Ring (1) mindestens zum Teil von einem dreidimensionalen Gewebe aus Keramikfasern gebildet ist, das Kettfäden und Schussfäden umfasst, und wobei das Verhältnis Kettfäden/Schussfäden innerhalb des Rings (1) variabel ist.

7. Turbinenringmontage nach Anspruch 6, wobei das Verhältnis innerhalb der ringförmigen Basis (12) weniger groß als innerhalb der Befestigungslaschen (14, 16) ist.

8. Strömungsmaschine, umfassend eine Turbinenringmontage (1) nach einem der Ansprüche 1 bis 7.

## Claims

1. A turbine ring assembly comprising a plurality of ring sectors (10) made of ceramic-matrix composite material forming a turbine ring (1) and a ring support structure (3), each ring sector (10) having, along a cutting plane defined by an axial direction (D_{A}) and a radial direction (D_{R}) of the turbine ring (1), said axial direction corresponding to the direction of flow of a gas stream (F) in said turbine, a base (12) with, in the radial direction (D_{R}) of the turbine ring (1), a radially inner face (12a) defining the inner face of the turbine ring (1) and a radially outer face (12b) from which an upstream attachment lug (14) and a downstream attachment lug (16) protrude, said ring support structure (3) including a shroud (31) which extends around the turbine ring (1), from which an upstream radial clamp (32) and a downstream radial clamp (36) by which the upstream and downstream attachment lugs (14, 16) of each ring sector (10) are held radially protrude towards the turbine ring (1), said shroud (31) including, relative to said direction of flow (F) of a gas stream in said turbine:
a first upstream portion (310) which extends radially above the first attachment lug (14) and a second downstream portion (320) which extends in the extension of the first upstream portion (310) and radially above the second attachment lug (16), said first upstream portion (310) having the shape of a right cylinder and the second downstream portion (320) having a frustoconical shape which, from one end of the first upstream portion (310), extends towards the axis of the turbine ring (1) while having a generally constant thickness;
said upstream radial clamp (32) extending from said upstream portion (310) to bear, directly or indirectly, against the upstream attachment lug (14), while the downstream radial clamp (36) extends from the downstream portion (320) to come into contact against the downstream attachment lug (16), **characterized in that** the ring (1) is held, relative to said radial clamps (32, 36), by axial pins (119, 120) which cooperate respectively on the one hand with the upstream radial clamp (32), via first and second annular flanges (33, 34) and directly with the downstream radial clamp (36), and on the other hand, with the upstream and downstream attachment lugs (14, 16) .

2. The turbine ring assembly according to claim 1, in which said shroud (31) has a generally constant thickness between said two clamps (32, 36).

3. The turbine ring assembly according to claim 1 or 2, in which the upstream (310) and downstream (320) portions form an angle comprised between 30 and 80°, preferably between 30 and 70°.

4. The turbine ring assembly according to any of claims 1 to 3, in which that said ring (1) is further compressively held between said radial clamps (32, 36).

5. The turbine ring assembly according to any of claims 1 to 4, in which said first and second annular flanges (33, 34) generally have the same thickness considered in the axial direction, along their radial extent.

6. The turbine ring assembly according to any of the preceding claims, wherein said ring (1) is at least partly formed of a three-dimensional weaving of ceramic fibers comprising warp yarns and weft yarns, in which the warp yarns/weft yarns ratio is variable within said ring (1).

7. The turbine ring assembly according to claim 6, in which said ratio is lower within said annular base (12) than within said attachment lugs (14, 16).

8. A turbomachine comprising a turbine ring assembly (1) according to any one of claims 1 to 7.
